# EUROPEAN PATENT APPLICATION

(11) **EP 4 557 082 A1**
(43) Date of publication of application: **21.05.2025**
(21) Application number: 23896421.7
(22) Date of filing: 31.10.2023
(51) Int. Cl.: G06F 8/61

(54) **CROSS-DEVICE APPLICATION HOPPING METHOD, RELATED DEVICE, AND COMMUNICATION SYSTEM**

(30) Priority: 29.11.2022 CN 202211511355
(71) Applicant: Huawei Technologies Co., Ltd., Shenzhen, Guangdong 518129 (CN)
(72) Inventor: PEI, Taiyi, Shenzhen, Guangdong 518129 (CN)
(74) Representative: Thun, Clemens
(86) International application number: PCT/CN2023/128688
(87) International publication number: WO 2024/114267

(57) **Abstract**

This application provides a cross-device application transfer method, a related apparatus, and a communication system. After receiving an operation of transferring a first application to a second device, a first device may determine whether a device capability of the second device meets a requirement of the first application. When the device capability of the second device meets the requirement of the first application, the first application may be successfully transferred from the first device to the second device. The method can break through a limitation of a device type on application transfer, so that an application can be transferred to any type of device whose device capability meets a requirement of the application.

## Description

This application claims priority to Chinese Patent Application No. 202211511355.8, filed with the China National Intellectual Property Administration on November 29, 2022 and entitled "CROSS-DEVICE APPLICATION TRANSFER METHOD, RELATED APPARATUS, AND COMMUNICATION SYSTEM", which is incorporated herein by reference in its entirety.

### TECHNICAL FIELD

This application relates to the field of terminal technologies, and in particular, to a cross-device application transfer method, a related apparatus, and a communication system.

### BACKGROUND

With development of communication technologies and devices, there are increasing types of devices, for example, wearable devices such as a mobile phone, a tablet computer, a television, a stereo, a smartwatch, and a headset, and various smart home devices. A user may have a plurality of types of devices, and can transfer an application run on a device to another device during use. The foregoing application transfer can implement collaborative work between a plurality of devices, to bring better use experience to the user.

Currently, however, the application can be successfully transferred only when a device type meets a running requirement of the application. As device types increase, if a developer does not upgrade and adjust the application, the application cannot be transferred to a device of a new device type.

### SUMMARY

This application provides a cross-device application transfer method, a related apparatus, and a communication system. A device may implement application transfer based on a device capability. In this way, an application can be transferred to any type of device whose device capability meets a requirement of the application. The method can break through a limitation of a device type on application transfer, and improve work efficiency of a developer. There may be no need for the developer to re-develop and adapt the application when a new device type occurs.

According to a first aspect, this application provides a cross-device application transfer method. A first device may detect a first operation, where the first operation may be used to transfer a first application. The first device may obtain first application information of the first application and first device information of a second device in response to the first operation, where the first application information includes information about a device capability required by the first application, and the first device information includes information about a device capability of the second device. The first device determines, based on the first application information and the first device information, that the device capability of the second device meets a requirement of the first application. The first device transfers the first application to the second device.

It can be learned from the method that a device may implement application transfer based on a device capability. In this way, even for a new device type, as long as a device capability of a device of the new device type meets a requirement of an application, the application can be transferred to the device of the new device type. There is no need for an application developer to upgrade and adjust the application for the new device type to make the application adapt to the new device type. It can be learned that the method can break through a limitation of a device type on application transfer, so that the application can be transferred to any type of device whose device capability meets the requirement of the application. In addition, the method can reduce workload of the developer, and improve work efficiency of the developer. There is no need for the developer to re-develop and adapt the application when a new device type occurs.

With reference to the first aspect, in some embodiments, the first application information may include an RPCID of the first application. The RPCID of the first application may be obtained by encoding the device capability required by the first application. The RPCID of the first application may further include information such as a version number of the first application. The first device information may include a PCID of the second device. The PCID of the second device may be obtained by encoding the device capability of the second device. The PCID of the second device may further include one or more pieces of the following information: an OS SDK version number of the second device, a system type of the second device, and a manufacturer ID of the second device.

With reference to the first aspect, in some embodiments, a specific process in which the first device obtains first application information of the first application and first device information of a second device in response to the first operation may include: The first device may find, through searching, K1 devices in response to the first operation, where the K1 devices include the second device, and K1 is a positive integer. The first device may provide K1 device options corresponding to the K1 devices, where the K1 device options include a device option corresponding to the second device. The first device detects an operation of selecting the device option corresponding to the second device. The first device obtains the first application information and the first device information.

It can be learned from the method that, after detecting an operation of transferring the first application, the first device may search for surrounding devices, and provide corresponding device options. Then, a user may select a device from these devices as a target device to which the first application is to be transferred. The first device may determine, based on the device selected by the user, whether a device capability of the device meets the requirement of the first application. In the foregoing embodiment, the first device may only determine whether the device capability of the device selected by the user meets the requirement of the first application. This can save a function of the first device, and improve a speed of the first device in responding to the operation of transferring the first application, such as the first operation.

If the first device determines that the device capability of the second device does not meet the requirement of the first application, the first device may inform the user that the first application cannot be transferred to the second device. In this case, the user may reselect a target device to which the first application is to be transferred.

With reference to the first aspect, in some other embodiments, a specific process in which the first device obtains first application information of the first application and first device information of a second device in response to the first operation may include: The first device may find, through searching, K1 devices in response to the first operation, where the K1 devices include the second device, and K1 is a positive integer. The first device may obtain the first application information and device information of the K1 devices, where the device information of the K1 devices includes the first device information. Further, the first device may determine, based on the first application information and the device information of the K1 devices, that device capabilities of K2 devices in the K1 devices meet the requirement of the first application, where the K2 devices include the second device, and K2 is a positive integer less than or equal to K1. The first device provides K2 device options corresponding to the K2 devices, where the K2 device options include a device option corresponding to the second device. The first device detects an operation of selecting the device option corresponding to the second device. Then, the first device may transfer the first application to the second device.

It can be learned from the method that, after detecting an operation of transferring the first application, the first device may search for surrounding devices, and perform screening on devices found through searching to obtain devices whose device capabilities meet the requirement of the first application, that is, the K2 devices. In the foregoing embodiment, the devices corresponding to the device options provided by the first device all may be devices whose device capabilities meet the requirement of the first application. The first application can be successfully transferred to any device that the user selects. This can avoid a case in which the user selects a device to which the first application cannot be transferred for application transfer and then needs to reselect a target device for application transfer.

With reference to the first aspect, in some embodiments, the first device may find a third device through searching. The first device may obtain second application information of a second application and second device information of the third device, where the second application information includes information about a device capability required by the second application, and the second device information includes information about a device capability of the third device. The first device may determine, based on the second application information and the second device information, that the device capability of the third device meets a requirement of the second application. The first device provides a first transfer control, where the first transfer control is used to transfer the second application to the third device. The first device detects an operation performed on the first transfer control, and transfers the second application to the third device.

It can be learned from the method that, the first device may recommend the user to transfer the second application to a device whose device capability meets the requirement of the second application. In this way, in an application transfer scenario, there is no need for the user to select a target device for application transfer. In the foregoing embodiment, an operation of transferring an application by the user can be simplified, to improve use experience of the user.

With reference to the first aspect, in some embodiments, the first device may send a request for obtaining the first application information to a server, and receive the first application information from the server. Alternatively, the first device stores the first application information. The first device may search a memory of the first device for the first application information.

The first device may not store a program installation package of the first application, or the first application may not be installed. When detecting the first operation used to transfer the first application, the first device may request the first application information from the server. Alternatively, the first device may store the program installation package of the first application, or the first application may be installed. The program installation package of the first application may include the first application information. When detecting the first operation used to transfer the first application, the first device may search a local memory for the first application information, so that there is no need for the first device to request the first application information from the server.

With reference to the first aspect, in some embodiments, that the first device transfers the first application to the second device may include: The first application is migrated to the second device, or the first device and the second device run the first application in collaboration.

For example, when detecting the first operation used to transfer the first application, the first device is running the first application. The first device may migrate the first application to the second device. The first device may send, to the second device, data used to restore a running state of the first application. When the first application is migrated to the second device, the second device may run the first application, and restore, based on the data used to restore the running state of the first application, a running state of the first application to a running state in which the first application is in when the first device migrates the first application. In this way, running states of the first application before and after the transfer can be seamless. An operation performed by the user on the first application on the first device may not be interrupted by the foregoing application transfer process. In addition, when the first application is migrated to the second device, the first device may stop running the first application.

For another example, after detecting the first operation used to transfer the first application, the first device may run the first application in collaboration with the second device. The first device may provide a function A by running the first application. The second device may provide a function B by running the second application. In this way, the first device and the second device run the first application in collaboration, so that better use experience can be brought to the user.

With reference to the first aspect, in some embodiments, when the device capability of the second device meets the requirement of the first application, the first device may send, to the second device, a request for transferring the first application. When receiving the request for transferring the first application, the second device may determine whether the first application is installed on the second device. When the first application is not installed on the second device, the second device requests installation of the first application from the server, and runs the first application after the first application is installed. When the first application is installed on the second device, the second device may directly run the first application.

In a process in which the second device requests the installation of the first application from the server, the second device may send a request for installing the first application to the server. The request for installing the first application may include the first device information of the second device. The server may determine, based on the request for installing the first application, whether the device capability of the second device meets the requirement of the first application. When the device capability of the second device meets the requirement of the first application, the server may send installation information for installing the first application to the second device. Then, the second device may install the first application. Otherwise, the server may send an installation failure message to the second device.

With reference to the first aspect, in some embodiments, the first device detects a second operation, where the second operation is used to transfer a third application to the second device. The first device obtains third application information of the third application and the first device information in response to the third operation, where the third application information includes information about a device capability required by the third application. The first device determines, based on the third application information and the first device information, that the device capability of the second device does not meet a requirement of the third application. The first device may provide a transfer failure prompt, where the transfer failure prompt indicates that the third application is unavailable to be transferred to the second device.

With reference to the first aspect, in some embodiments, the first device sends third device information of the first device to the second device, where the third device information includes information about a device capability of the first device. The first device receives a request for transferring a fourth application to the first device. The first device may run the fourth application. The device capability of the first device meets a requirement of the fourth application.

The first device may also be a target device for application transfer. For example, the second device may transfer the fourth application to the first device. The second device may determine, based on the third device information of the first device and a device capability required by the fourth application, whether the device capability of the first device meets the requirement of the fourth application. When the device capability of the first device meets the requirement of the fourth application, the second device may transfer the fourth application to the first device.

When receiving the request for transferring the fourth application to the first device, the first device may determine whether the fourth application is installed on the first device. When the fourth application is not installed on the first device, the first device requests installation of the fourth application from the server, and runs the fourth application after the fourth application is installed. When the fourth application is installed on the first device, the first device may directly run the fourth application.

With reference to the first aspect, in some embodiments, the first device may send a first request to the server, where the first request is used to request the installation of the fourth application, the first request includes the third device information of the first device, and the third device information includes the information about the device capability of the first device. The first device receives installation information of the fourth application, and installs the fourth application. The device capability of the first device meets the requirement of the fourth application.

The server may determine, based on the first request, whether the device capability of the first device meets the requirement of the fourth application. When the device capability of the first device meets the requirement of the fourth application, the server may send the installation information of the fourth application to the first device.

With reference to the first aspect, in some embodiments, the first device may send a second request to the server, where the second request is used to request installation of a fifth application, the second request includes the third device information of the first device, and the third device information includes the information about the device capability of the first device. The first device receives an installation failure prompt, where the installation failure prompt indicates that the fifth application is unavailable to be installed on the first device. The device capability of the first device does not meet a requirement of the fifth application.

The server may determine, based on the second request, whether the device capability of the first device meets the requirement of the fifth application. When the device capability of the first device does not meet the requirement of the fifth application, the server may send the installation failure prompt to the first device.

It can be learned from the foregoing embodiment that, an application may be installed on a device based on a device capability. **In** this way, even for a new device type, as long as a device capability of a device of the new device type meets a requirement of an application, the application can be installed on the device of the new device type. There is no need for an application developer to upgrade and adjust the application for the new device type to make the application adapt to the new device type. It can be learned that the method can break through a limitation of a device type on application installation, so that the application can be installed on any type of device whose device capability meets the requirement of the application. In addition, the method can reduce workload of the developer, and improve work efficiency of the developer. There is no need for the developer to re-develop and adapt the application when a new device type occurs.

With reference to the first aspect, in some embodiments, the information about the device capability includes one or more of the following: information about a system capability, information about a chip solution capability, and information about a product solution capability.

According to a second aspect, this application provides a communication system. The communication system may include a first device and a second device. The first device may be configured to detect a first operation, where the first operation may be used to transfer a first application. The first device may be further configured to obtain first application information of the first application and first device information of a second device in response to the first operation, where the first application information includes information about a device capability required by the first application, and the first device information includes information about a device capability of the second device. The first device may be further configured to: determine, based on the first application information and the first device information, that the device capability of the second device meets a requirement of the first application, and send, to the second device, a request for transferring the first application. The second device may be configured to run the first application based on the request for transferring the first application.

It can be learned from the method that a device may implement application transfer based on a device capability. In this way, even for a new device type, as long as a device capability of a device of the new device type meets a requirement of an application, the application can be transferred to the device of the new device type. There is no need for an application developer to upgrade and adjust the application for the new device type to make the application adapt to the new device type. It can be learned that the method can break through a limitation of a device type on application transfer, so that the application can be transferred to any type of device whose device capability meets the requirement of the application. In addition, the method can reduce workload of the developer, and improve work efficiency of the developer. There is no need for the developer to re-develop and adapt the application when a new device type occurs.

With reference to the second aspect, in some embodiments, the first application information may include an RPCID of the first application. The RPCID of the first application may be obtained by encoding the device capability required by the first application. The RPCID of the first application may further include information such as a version number of the first application. The first device information may include a PCID of the second device. The PCID of the second device may be obtained by encoding the device capability of the second device. The PCID of the second device may further include one or more pieces of the following information: an OS SDK version number of the second device, a system type of the second device, and a manufacturer ID of the second device.

With reference to the second aspect, in some embodiments, the second device may be further configured to determine, based on the request for transferring the first application, whether the first application is installed on the second device. The second device may be configured to: when the first application is not installed on the second device, request installation of the first application from a server, and run the first application after the first application is installed.

With reference to the second aspect, in some embodiments, the communication system may further include a server. The server may be configured to determine, based on a request of the second device for installing the first application, whether the device capability of the second device meets the requirement of the first application. The server may be configured to: when the device capability of the second device meets the requirement of the first application, send installation information of the first application to the second device. The second device may be configured to install the first application based on the installation information of the first application.

It can be learned from the foregoing embodiment that, an application may be installed on a device based on a device capability. In this way, even for a new device type, as long as a device capability of a device of the new device type meets a requirement of an application, the application can be installed on the device of the new device type. There is no need for an application developer to upgrade and adjust the application for the new device type to make the application adapt to the new device type. It can be learned that the method can break through a limitation of a device type on application installation, so that the application can be installed on any type of device whose device capability meets the requirement of the application. In addition, the method can reduce workload of the developer, and improve work efficiency of the developer. There is no need for the developer to re-develop and adapt the application when a new device type occurs.

With reference to the second aspect, in some embodiments, the first device may be configured to send a request for obtaining the first application information to the server. The server may be configured to send the first application information to the first device. Alternatively, the first device stores the first application information. The first device may be configured to search a memory of the first device for the first application information.

With reference to the second aspect, in some embodiments, the information about the device capability includes one or more of the following: information about a system capability, information about a chip solution capability, and information about a product solution capability.

According to a third aspect, this application provides a device. The device may include a memory and a processor. The memory may be configured to store a computer program, and the processor may be configured to invoke the computer program, to enable the device to perform the method according to any possible implementation of the first aspect.

According to a fourth aspect, this application provides a computer-readable storage medium, including instructions. When the instructions are run on a device, the device is enabled to perform the method according to any possible implementation of the first aspect.

According to a fifth aspect, this application provides a computer program product. The computer program product may include computer instructions. When the computer instructions are run on a device, the device is enabled to perform the method according to any possible implementation of the first aspect.

According to a sixth aspect, this application provides a chip. The chip is used in a device, the chip includes one or more processors, and the processor is configured to invoke computer instructions to enable the device to perform the method according to any possible implementation of the first aspect.

It may be understood that the device provided in the third aspect, the computer-readable storage medium provided in the fourth aspect, the computer program product provided in the fifth aspect, and the chip provided in the sixth aspect are all configured to perform the method provided in embodiments of this application. Therefore, for beneficial effects that can be achieved, refer to the beneficial effects in the corresponding method. Details are not described herein again.

### BRIEF DESCRIPTION OF DRAWINGS

FIG. 1 is a diagram of an architecture of a communication system 10 according to an embodiment of this application;
FIG. 2 is a diagram of a structure of a device 100 according to an embodiment of this application;
FIG. 3 is a block diagram of a software structure of a device 100 according to an embodiment of this application;
FIG. 4 is a diagram of an architecture of a communication system 40 according to an embodiment of this application;
FIG. 5A to FIG. 5C are some diagrams of a cross-device application transfer scenario according to an embodiment of this application;
FIG. 6A and FIG. 6B are some other diagrams of a cross-device application transfer scenario according to an embodiment of this application;
FIG. 7A is a diagram of encoding of a PCID according to an embodiment of this application;
FIG. 7B is a diagram of encoding of an RPCID according to an embodiment of this application;
FIG. 8A and FIG. 8B are a flowchart of a cross-device application transfer method according to an embodiment of this application; and
FIG. 9 is a flowchart of an application installation method according to an embodiment of this application.

### DESCRIPTION OF EMBODIMENTS

The following describes technical solutions in embodiments of this application with reference to accompanying drawings in embodiments of this application. In descriptions of embodiments of this application, terms used in the following embodiments are merely intended for a purpose of describing specific embodiments, but are not intended to limit this application. The singular expressions "a", "the", "the foregoing", "this", and "the one" used in this specification and the appended claims of this application are also intended to include expressions such as "one or more", unless otherwise specified in the context clearly. It should be further understood that, in the following embodiments of this application, "at least one" and "one or more" mean one or at least two (including two). The term "and/or" is used to describe an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner. The term "connection" includes a direct connection and an indirect connection, unless otherwise specified. "First" and "second" are merely intended for a purpose of description, and shall not be understood as an indication or implication of relative importance or implicit indication of a quantity of indicated technical features.

In embodiments of this application, the expression "example", "for example", or the like is used to give an example, an illustration, or a description. Any embodiment or design scheme described as an "example" or "for example" in embodiments of this application shall not be construed as being more preferred or more advantageous than another embodiment or design scheme. Exactly, use of the expression "example", "for example", or the like is intended to present a related concept in a specific manner.

The term "user interface (user interface, UI)" in the following embodiments of this application is a medium interface for interaction and information exchange between an application (application, APP) or an operating system (operating system, OS) and a user, and implements conversion between an internal form of information and a form acceptable to a user. The user interface is source code written in a specific computer language, for example, Java or an extensible markup language (extensible markup language, XML). Interface source code is parsed and rendered on an electronic device, and is finally presented as content that can be identified by the user. The user interface is usually represented in a form of graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget that is displayed in a display of the electronic device.

This application provides a cross-device application transfer method. A device may store a product compatibility ID (product compatibility ID, PCID). The PCID may indicate a device capability of the device. A configuration file of an APP may include a required product compatibility ID (required product compatibility ID, RPCID) of the APP. The RPCID may indicate a device capability required by the APP. In other words, if the device has the device capability required by the APP, the device may run the APP. If the device capability of the device does not meet a requirement of the APP, the APP cannot be run on the device. In response to an operation of transferring a first APP run on a first device to a second device, the first device may determine, based on an RPCID of the first APP and a PCID of the second device, whether a device capability of the second device meets a requirement of the first APP. If the device capability of the second device can meet the requirement of the first APP, the first device may transfer the first APP to the second device, and the second device runs the first APP. If the device capability of the second device does not meet the requirement of the first APP, the first APP cannot be transferred from the first device to the second device.

It can be learned from the method that the device may implement application transfer based on a device capability. In this way, even for a new device type, as long as a device capability of a device of the new device type meets a requirement of an application, the application can be transferred to the device of the new device type. There is no need for an application developer to upgrade and adjust the application for the new device type to make the application adapt to the new device type. It can be learned that the method can break through a limitation of a device type on application transfer, so that the application can be transferred to any type of device whose device capability meets the requirement of the application. In addition, the method can reduce workload of the developer, and improve work efficiency of the developer. There is no need for the developer to re-develop and adapt the application when a new device type occurs.

For ease of understanding, some concepts in this application are described herein.

### 1. Application (APP)

APPs may include conventional applications and installation-free applications. The conventional application may be an APP that can be installed on a device only after a user performs an installation operation in an APP used to install an application (for example, an application market APP). In other words, the user needs to perform an explicit installation operation to install the conventional application on the device. The installation-free application may be an APP that can be installed by the device in the background by using a system program framework and that can be directly used by the user without a need for an installation operation. In other words, the installation-free application does not need an explicit installation operation of the user. The installation-free application may also be referred to as a distributed application or another name.

The installation-free application may include one or more components. One component may implement one or more functions. In some embodiments, a component is run on the device, and may further display one or more interfaces. A component included in an installation-free application may be a sub-application of the installation-free application. One installation-free application may provide a plurality of functions. One component of the installation-free application may be used to provide a part or all of functions of the installation-free application. For example, a shopping application is an installation-free application. The shopping application may provide a commodity browsing function, a shopping cart function, a payment function, and the like. The shopping application may include a component used to provide the commodity browsing function, a component used to provide the shopping cart function, and a component used to provide the payment function. A component included in the installation-free application may be understood as an activity in Android^{®}, or the component may be understood as an ability in HarmonyOS^{®}.

In some embodiments, a component may alternatively be understood as an installation-free application.

An installation-free application may support installation in units of components. Different components may have different program installation packages. The program installation package may include code, a resource, a third-party library, and a configuration file that are used to implement the component. The device may install only a part of components of an installation-free application. For example, only the component used to provide the commodity browsing function is installed on the device currently. The user may use this component to browse commodities. In response to an operation of adding a commodity to a shopping cart, the device may obtain a program installation package of the component used to provide the shopping cart function, and install the component used to provide the shopping cart function. In this way, the user can add the specified commodity to the shopping cart. In response to an operation of selecting a commodity and making a payment, the device may obtain a program installation package of the component used to provide the payment function, and install the component used to provide the payment function. In this way, the user can pay for the corresponding commodity.

Different components of an installation-free application may be distributed on a plurality of devices. The plurality of devices may function in collaboration by using their respective installed components, to implement a requirement of the user. For example, a first device has no payment account. A second device has a payment account, and may make a shopping payment. The component used to provide the commodity browsing function and the component used to provide the shopping cart function are installed on the first device. The component used to provide the payment function is installed on the second device. In this case, the user may browse commodities on the first device, and add a to-be-purchased commodity to a shopping cart. Then, the user may make a payment on the second device, to purchase the commodity added to the shopping cart on the first device.

The foregoing conventional application may also provide a plurality of services. Compared with an installation-free application, a program installation package that provides a plurality of services in a conventional application may be installed on a device as a whole. In other words, the conventional application does not support installation in units of components. The plurality of services that may be provided by the conventional application cannot be distributed on different electronic devices.

The cross-device application transfer method provided in this application is applicable to both the installation-free application and the conventional application.

### 2. Device capability

A device capability of a device may include one or more of the following: a screen display capability, an image capture capability, an audio acquisition capability, an audio play capability, a call capability, a video play capability, a Bluetooth communication capability, a wireless local area network (wireless local area network, WLAN) communication capability, and the like. The device capability of the device depends on a software program and a hardware apparatus on the device. For example, a device with a display may have a screen display capability. A device without a display does not have a screen display capability.

The device capability may be classified into a system capability, a chip solution capability, and a product solution capability.

The system capability may include a capability provided by an operating system of the device. For example, the system capability may include but is not limited to the following: a screen display capability, an image capture capability, an audio acquisition capability, an audio play capability, a call capability, a video play capability, a Bluetooth communication capability, a WLAN communication capability, and the like.

The chip solution capability may include a capability provided by a chip of the device. For example, the device includes a neural-network processing unit (neural-network processing unit, NPU). A chip solution capability provided by the device by using the NPU may include but is not limited to the following: an image identification capability, a face identification capability, a speech identification capability, a text understanding capability, and the like. The device includes a graphics processing unit (graphics processing unit, GPU). A chip solution capability that may be provided by the device by using the GPU may include but is not limited to a graphics rendering capability and the like.

The product solution capability may include a capability defined by a device manufacturer according to a product requirement. For example, a product solution capability of a refrigerator may include but is not limited to a capability of monitoring freshness of foodstuffs, a capability of monitoring a foodstuffs storage amount, and the like. A product solution capability of a table lamp may include but is not limited to a capability of intelligently turning on and turning off a light, a capability of intelligently adjusting brightness and color temperature, and the like.

The system capability, the chip solution capability, and the product solution capability are not limited in embodiments of this application.

### 3. Application transfer

Application transfer may include cross-end application migration and multi-end application collaboration.

The cross-end application migration may mean that when an APP is run on a device, according to a user requirement, the APP is switched to another device for continuous running, and running of the APP on the original device may stop. In other words, in a cross-end application migration scenario, a first device runs a first APP, and in response to an operation of migrating the first APP to a second device, the first device may indicate the second device to run the first APP. Based on a running state in which the first APP is in when the first device migrates the first APP, the second device may continue to run the first APP. In addition, after the first APP is transferred to the second device, the first device may stop running the first APP.

For example, the first device is running an email APP, and receives email information (such as an email address, an email subject, and email body content) input by a user. The first device may transfer the email APP to the second device. The second device may run the email APP, and display the email information that has been input by the user on the first device. In this way, the user can continue email editing on the second device. After the email APP is transferred to the second device, the first device may close the email APP.

In some embodiments, the cross-end application migration may further include the following: A device transfers an APP that is not run on the device to a target device, so that the target device runs the transferred APP. That the transferred APP is not run on the device may include the following: The transferred APP is not installed on the device, or the transferred APP is installed on the device but is not run on the device.

For example, the first device is running a program corresponding to a component that is of a shopping application and that is used to provide a commodity browsing function and a program corresponding to a component that is of the shopping application and that is used to provide a shopping cart function. The user may browse commodities on the first device and add a required commodity to a shopping cart. A component that is of the shopping application and that is used to provide a payment function is not installed on the first device. In response to an operation of paying for a commodity in the shopping cart, the first device may transfer, to the second device, the component used to provide the payment function. The second device may run a program corresponding to the component used to provide the payment function. In this way, the user can complete a payment on the second device.

The multi-end application collaboration may mean that different APPs (such as components) are simultaneously or alternately run on a plurality of devices to implement a complete service, or a same APP (such as a component) is simultaneously run on a plurality of devices to implement a complete service. In other words, in a multi-end application collaboration scenario, the first device runs a second APP, and in response to an operation of using the second device to run the second APP in collaboration, the first device may indicate the second device to run the second APP or programs corresponding to one or more components of the second APP.

For example, the first device is running a game APP, and receives an operation of using the second device for collaboration. The first device may transfer the game APP to the second device. The first device may run a program corresponding to a component that is of the game APP and that is used to provide a gamepad function. The second device may run a program corresponding to a component that is of the game APP and that is used to provide a game picture display function. In this way, the user can watch a game picture by using the second device, and perform a game operation by using the gamepad function on the first device. The foregoing multi-end collaboration method can improve game experience of the user.

It can be learned that the application transfer can be used to implement multi-device linkage, and provide distributed services such as cross-device email editing, multi-device collaborative fitness, and multi-screen gaming. This can help the user better use a plurality of devices, and improve device use experience in different scenarios.

**The following describes a diagram of an architecture of a communication system 10 according to an embodiment of this application.**

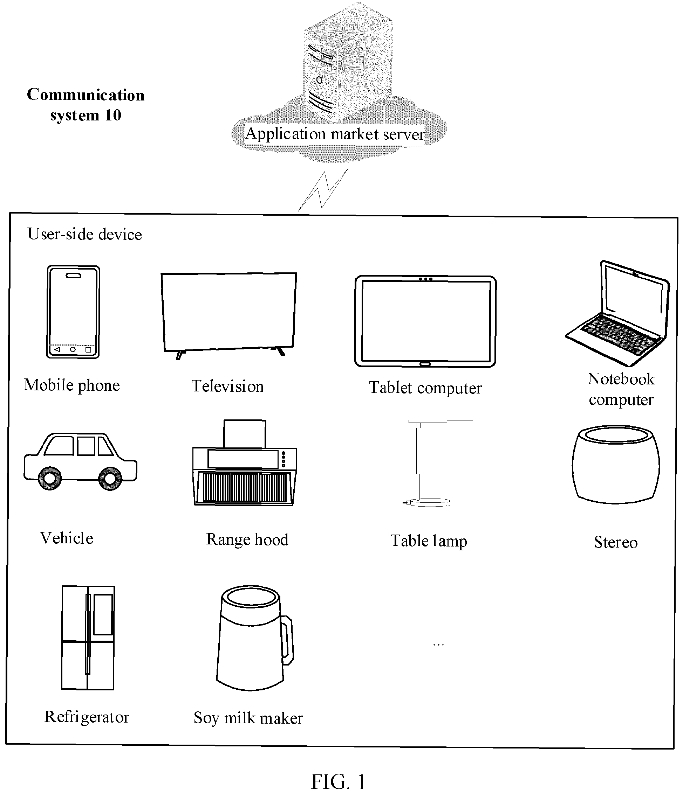

As shown in FIG. 1, the communication system 10 may include a user-side device and an application market server.

The application market server may store a program installation package of each APP. The user-side device may obtain a program installation package of an APP from the application market server, to install the corresponding APP on the user-side device. The program installation package of the APP may include a configuration file. A developer of the APP may write an RPCID of the APP into the configuration file of the APP when developing the APP.

The user-side device may include a device that is interacted with and used by a user. A device type of the user-side device may include but is not limited to a mobile phone, a television, a tablet computer, a notebook computer, a vehicle, a range hood, a table lamp, a stereo, a refrigerator, a soy milk maker, or the like. The user-side device may establish a communication connection with the application market server. The communication connection may be, for example, a 2G/3G/4G/5G communication connection, a wireless fidelity (wireless fidelity, Wi-Fi) network communication connection, or the like. A manner of the communication connection is not limited in embodiments of this application.

A communication connection may also be established between user-side devices. For example, a mobile phone and a television may establish a communication connection. The mobile phone and the television may work in collaboration to run a game APP. The mobile phone may provide the user with a gamepad function. The television may provide the user with a game interface viewing function. For another example, a mobile phone and a range hood may function in collaboration. The mobile phone may transfer a recipe APP to the range hood. The range hood may display a recipe in the recipe APP. The user may view the recipe on a display of the range hood.

**The following describes a structure of a user-side device according to an embodiment of this application by using a structure of a mobile phone as an example.**

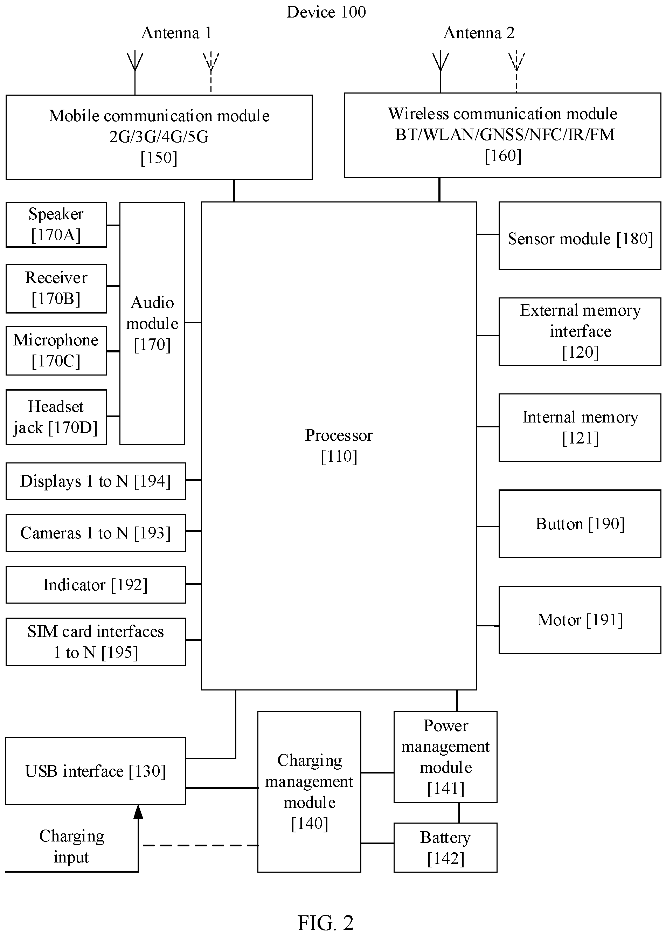

FIG. 2 is a diagram of an example of a structure of a device 100 according to an embodiment of this application.

As shown in FIG. 2, the device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the device 100. In some other embodiments of this application, the device 100 may include more or fewer components than those shown in the figure, or some components may be combined, or some components may be split, or a different component arrangement may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the device 100. The controller may generate an operation control signal based on an instruction operation code and a time sequence signal, to complete control of instruction reading and instruction execution.

A memory may be further disposed in the processor 110, and is configured to store instructions and data. In some examples, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the device 100, or may be configured to exchange data between the device 100 and a peripheral device, or may be configured to connect to a headset for playing audio through the headset.

The charging management module 140 is configured to receive a charging input from a charger. The charger may be a wireless charger or a wired charger. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or an input from the charging management module 140, to supply power to the processor 110, the internal memory 121, an external memory, the display 194, the camera 193, the wireless communication module 160, and the like.

A wireless communication function of the device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The device 100 implements a display function by using the GPU, the display 194, the application processor, and the like. The GPU is a microprocessor for image processing, and is connected to the display 194 and the application processor. The GPU is configured to: perform mathematical and geometric computation, and render an image.

The display 194 is configured to display an image, a video, and the like. In some embodiments, the device 100 may include one or N displays 194, where N is a positive integer greater than 1.

The device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the device 100 may include one or N cameras 193, where N is a positive integer greater than 1.

The digital signal processor is configured to process a digital signal, and may process another digital signal in addition to the digital image signal. For example, when the device 100 performs frequency selection, the digital signal processor is configured to perform Fourier transform and the like on frequency energy.

The NPU is a neural-network (neural-network, NN) computing processor, and quickly processes input information with reference to a structure of a biological neural network, for example, a transfer mode between human brain neurons, and may further continuously perform self-learning. The NPU may be used to implement an application like intelligent cognition of the device 100, for example, image identification, face identification, speech identification, and text understanding.

The external memory interface 120 may be configured to connect to an external storage card, for example, a micro SD card, to extend a storage capability of the device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the device 100. The internal memory 121 may include a program storage area and a data storage area. The program storage area may store an operating system, an application required by at least one function (for example, a sound playing function or an image playing function), and the like. The data storage area may store data (such as audio data and an address book) and the like created when the device 100 is used. In addition, the internal memory 121 may include a high-speed random access memory, or may include a non-volatile memory, for example, at least one magnetic disk storage device, a flash memory, or a universal flash storage (universal flash storage, UFS).

The device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some examples, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the device 100. The device 100 may support one or N SIM card interfaces, where N is a positive integer greater than 1. The device 100 interacts with a network by using the SIM card, to implement a call function, a data communication function, and the like. In some examples, the device 100 uses an eSIM, namely, an embedded SIM card. The eSIM card may be embedded into the device 100, and cannot be separated from the device 100.

The device 100 may be a device running iOS^{®}, Android^{®}, Windows^{®}, HarmonyOS^{®}, or another operating system. An operating system run on the device 100 is not limited in embodiments of this application. For a structure of a user-side device such as a tablet computer, a notebook computer, a television, a stereo, a range hood, and a refrigerator in the communication system 10 shown in FIG. 1, refer to the structure of the device 100 shown in FIG. 2. These user-side devices may include more or fewer components than the device 100.

A software system of the device 100 may use a layered architecture, an event-driven architecture, a microkernel architecture, a microservice architecture, or a cloud architecture. Herein, an Android^{®} system with a layered architecture is used as an example to describe the software structure of the device 100.

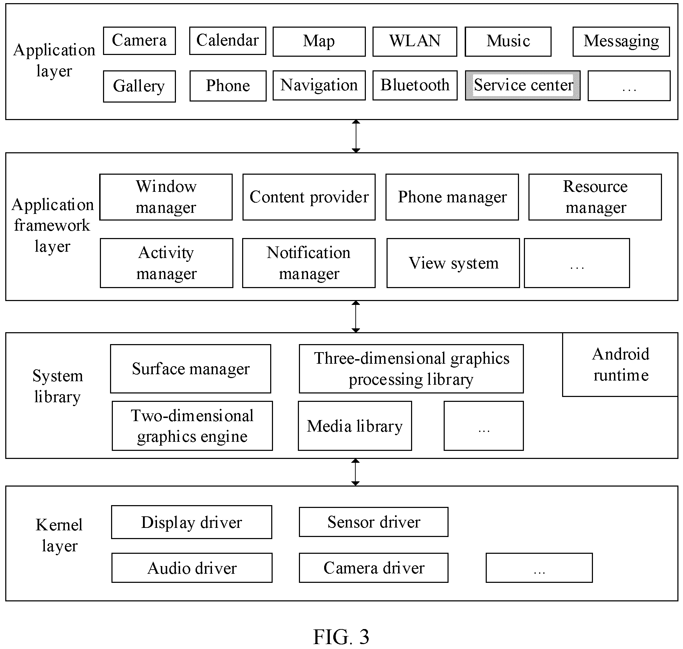

**FIG. 3** **is a block diagram of the software structure of the device 100 according to an embodiment of this application.**

In a layered architecture, software is divided into several layers, and each layer has a clear role and task. The layers communicate with each other through a software interface. In some embodiments, the Android^{®} system is divided into four layers: an application layer, an application framework layer, an Android runtime (Android Runtime) and a system library, and a kernel layer from top to bottom.

The application layer may include a series of application packages.

As shown in FIG. 3, the application package may include applications such as Camera, Gallery, Calendar, Phone, Map, Navigation, WLAN, Bluetooth, Music, Messaging, and Service center. The Service center APP may be used to obtain a program installation package of an APP. For example, when the component that is of the foregoing shopping application and that is used to provide the shopping cart function is not installed on the device 100, in response to an operation of adding a commodity to a shopping cart, the Service center APP may request, from an application market server, a program installation package of the component used to provide the shopping cart function. Then, the component used to provide the shopping cart function may be installed on the device 100.

The application framework layer provides an API and a programming framework for an application at the application layer. The application framework layer includes some predefined functions.

As shown in FIG. 3, the application framework layer may include a window manager, a content provider, a view system, a phone manager, a resource manager, a notification manager, an activity manager, and the like.

The window manager is used to manage a window program. The window manager may obtain a size of a display, determine whether there is a status bar, perform screen locking, take a screenshot, and the like.

The content provider is used to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is used to provide a communication function for the device 100, for example, management of a call status (including answering, declining, or the like).

The resource manager provides various resources such as a localized character string, an icon, an image, a layout file, and a video file for an application.

The notification manager enables an application to display notification information in a status bar (for example, a drop-down notification bar) and may be used to convey a notification message. The notification information may automatically disappear after a short pause without user interaction. For example, the notification manager is used to notify download completion, give a message notification, and the like. The notification manager may alternatively be a notification that appears in a top status bar of the system in a form of graph or scroll bar text, for example, a notification of an application that is run in the background, or may be a notification that appears on a screen in a form of dialog window. For example, text information is displayed in the status bar, an announcement is given, the device vibrates, or an indicator light blinks.

The activity manager is responsible for managing an activity (activity), and is responsible for starting, switching, and scheduling each component in the system, and managing and scheduling an application. The activity manager can be invoked by an upper-layer application to start a corresponding activity.

The Android Runtime includes a kernel library and a virtual machine. The Android Runtime is responsible for scheduling and management of the Android system.

The kernel library includes two parts: a function that needs to be invoked in Java language, and a kernel library of Android.

The application layer and the application framework layer run on the virtual machine. The virtual machine executes Java files of the application layer and the application framework layer as binary files. The virtual machine is used to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is used to: manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In some embodiments, the software structure of the device 100 shown in FIG. 3 may further include a system service layer (not shown in FIG. 3). The system service layer is a set of core capabilities of an operating system of the device 100. The system service layer may provide a service for an application by using the application framework layer. The system service layer may include a system basic capability subsystem set, a basic software service subsystem set, an enhanced software service subsystem set, and a hardware service subsystem set. The system basic capability subsystem set may provide basic capabilities for an application to perform operations such as running, scheduling, and migrating on a plurality of devices. The system basic capability subsystem set may include subsystems such as a distributed soft bus subsystem, a distributed data management subsystem, and a distributed task scheduling subsystem. The basic software service subsystem set may provide common and universal software services for the operating system. The basic software service subsystem set may include subsystems such as a time notification subsystem, a phone subsystem, and a multimedia subsystem. The enhanced software service subsystem set may provide the operating system with differentiated and capability-enhanced software services for different devices. The enhanced software service subsystem set may include subsystems such as a dedicated service for a smart screen, a dedicated service for a wearable device, and a dedicated service for an internet of things device. The hardware service subsystem set may provide hardware services for the operating system. The hardware service subsystem set may include subsystems such as a location service, a biometric feature identification service, a dedicated hardware service for a wearable device, and a dedicated hardware service for an internet of things device.

A location of the system service layer in the software structure is not limited in embodiments of this application. For example, the system service layer may be between the application layer and the application framework layer. Alternatively, the system service layer may be between the application framework layer and the system library.

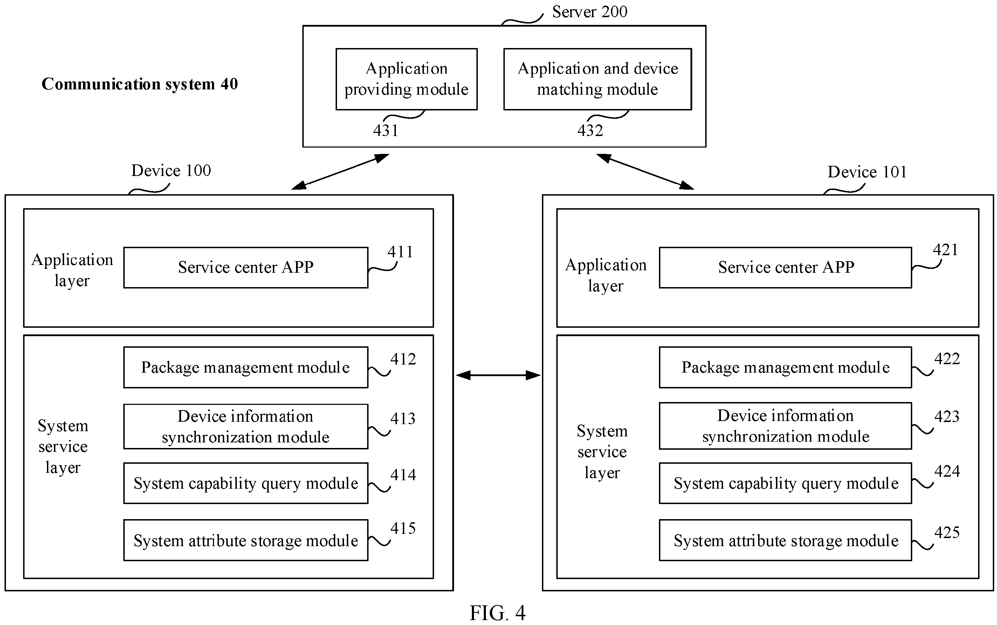

**FIG. 4** **is a diagram of an example of an architecture of another communication system 40 according to an embodiment of this application.**

As shown in FIG. 4, the communication system 40 may include a device 100, a device 101, and a server 200. Both the device 100 and the device 101 may be the user-side devices shown in FIG. 1. The server 200 may be the application market server shown in FIG. 1. Communication connections may be established between the device 100, the device 101, and the server 200. The communication connection may be, for example, a wired communication connection, or a wireless communication connection such as a 2G/3G/4G/5G communication connection, a Wi-Fi communication connection, or a Bluetooth communication connection. A manner of the communication connection is not limited in embodiments of this application.

The device 100 may include an application layer and a system service layer. The application layer may include an application such as a Service center APP 411. The system service layer may include a package management module 412, a device information synchronization module 413, a system capability query module 414, and a system attribute storage module 415.

The system attribute storage module 415 may be configured to store attribute information of an operating system of the device 100. For example, the attribute information of the operating system of the device 100 may include the following: a PCID of the device 100, an operating system type of the device 100, a manufacturer identification of the device 100, a version number of a software development kit (software development kit, SDK) of the operating system of the device 100, and the like. The attribute information of the operating system is not limited in embodiments of this application. The attribute information of the operating system may be written into the system attribute storage module 415 before delivery of the device 100.

The system capability query module 414 may be configured to obtain the attribute information of the operating system of the device 100 from the system attribute storage module 415. The system capability query module 414 may be configured to provide a query interface, to facilitate querying of the attribute information of the operating system of the device 100 by a module such as the device information synchronization module 413.

The device information synchronization module 413 may be configured to synchronize respective device information between the device 100 and another device. The device information synchronization module 413 may query and obtain the attribute information of the operating system of the device 100 by using a query structure provided by the system capability query module 414. The device 100 may send the device information (for example, a device name, a device type, and the attribute information of the operating system) of the device 100 to another electronic device by using the device information synchronization module 413. The device 100 may further obtain the device information of the another device by using the device information synchronization module 413.

The package management module 412 may be configured to: manage a program installation package in the device 100, and install a corresponding APP on the device 100. In some embodiments, the package management module 412 may be configured to determine, based on a PRCID of the APP and a PCID of a device that establishes a communication connection with the device 100, whether the device that establishes the communication connection with the device 100 meets a requirement of the APP, to determine whether the APP can be transferred to the device that establishes the communication connection with the device 100. When the APP can be transferred to the device that establishes the communication connection with the device 100, for example, the device 101, the package management module 412 may send, to the device 101, a request for transferring the APP, to transfer the APP from the device 100 to the device 101.

In some embodiments, the package management module 412 may obtain the program installation package of the APP or the RPCID of the APP from the server 200 via the Service center APP 411. In some other embodiments, the device 100 stores the program installation package of the APP. The program installation package of the APP may include the RPCID of the APP. The package management module 412 may obtain the RPCID of the APP from the program installation package that is of the APP and that is stored in the device 100.

The Service center APP 411 may be used to obtain the program installation package of the APP from the server 200. In some embodiments, alternatively, the Service center APP 411 may separately obtain the RPCID of the APP from the server 200. The server 200 may send an obtained program installation package of the APP or an obtained RPCID of the APP to the package management module 412. An application that is in the device 100 and that is used to obtain the program installation package of the APP is not limited in embodiments of this application.

Not limited to the modules shown in FIG. 4, the device 100 may further include more or fewer modules, or combine some modules, or split some modules. For example, the device 100 may further include the application framework layer, the system library, and the kernel layer shown in FIG. 3.

The device 101 may include an application layer and a system service layer. The application layer may include an application such as a Service center APP 421. The system service layer may include a package management module 422, a device information synchronization module 423, a system capability query module 424, and a system attribute storage module 425. For the Service center APP 421, the package management module 422, the device information synchronization module 423, the system capability query module 424, and the system attribute storage module 425, refer to the descriptions of the Service center APP 411, the package management module 412, the device information synchronization module 413, the system capability query module 414, and the system attribute storage module 415 of the device 100 respectively. Details are not described herein again.

Device types of the device 100 and the device 101 may be the same or different. Types of operating systems of the device 100 and the device 101 may be the same.

The server 200 may include an application providing module 431 and an application and device matching module 432.

The application providing module 431 may be configured to provide a program installation package of an APP. For example, in response to a request of the device 100 for obtaining a first APP, the server 200 may send a download address of the first APP to the device 100 by using the application providing module 431. The device 100 may download a program installation package of the first APP based on the download address of the first APP. In some embodiments, the application providing module 431 may be further configured to separately provide an RPCID of the APP.

The application and device matching module 432 may be configured to determine, based on the RPCID of the APP and a PCID of a device, whether the APP is matched with the device. If the APP is matched with the device, it may indicate that a device capability of the device can meet a requirement of the APP. In other words, the PCID of the device includes all device capabilities required by the RPCID of the APP. If the APP is not matched with the device, it may indicate that the device capability of the device does not meet the requirement of the APP. In other words, the PCID of the device does not include all the device capabilities required by the RPCID of the APP, or the PCID of the device includes only a part of the device capabilities required by the RPCID of the APP.

In some embodiments, when receiving the request of the device 100 for obtaining the first APP, the server 200 may determine, by using the application and device matching module 432, whether the first APP is matched with the device 100. When the first APP is matched with the device 100, the server 200 may send the download address of the first APP to the device 100 by using the application providing module 431. When the first APP is not matched with the device 100, the server 200 may reject the request of the device 100 for obtaining the first APP. In other words, when the first APP is matched with the device 100, the first APP can be installed on the device 100. When the first APP is not matched with the device 100, the first APP cannot be installed on the device 100.

The server 200 may alternatively include more or fewer modules. Division into modules in the server 200 is not limited in embodiments of this application.

**The following describes a cross-device application transfer scenario provided in an embodiment of this application.**

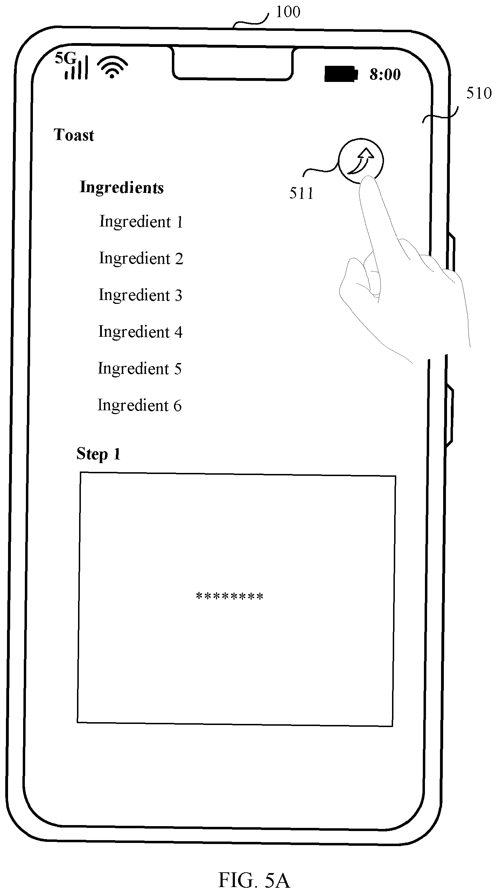

FIG. 5A to FIG. 5C are diagrams of an example of a cross-device application transfer scenario.

As shown in FIG. 5A, a device 100 may run a recipe APP, and display a user interface 510. The user interface 510 may be a user interface of the recipe APP. The device 100 may display, in the user interface 510, specific content of a recipe viewed by a user. For example, in response to an operation of starting the recipe APP by the user, the device 100 may display a home screen of the recipe APP. Then, in response to an operation of searching the recipe APP for a "Toast" recipe, the device 100 may display a user interface corresponding to the "Toast" recipe in the recipe APP (with reference to the user interface 510).

In some embodiments, the device 100 may further display a transfer control 511 in the user interface 510. The transfer control 511 may be used to transfer the recipe APP to another device.

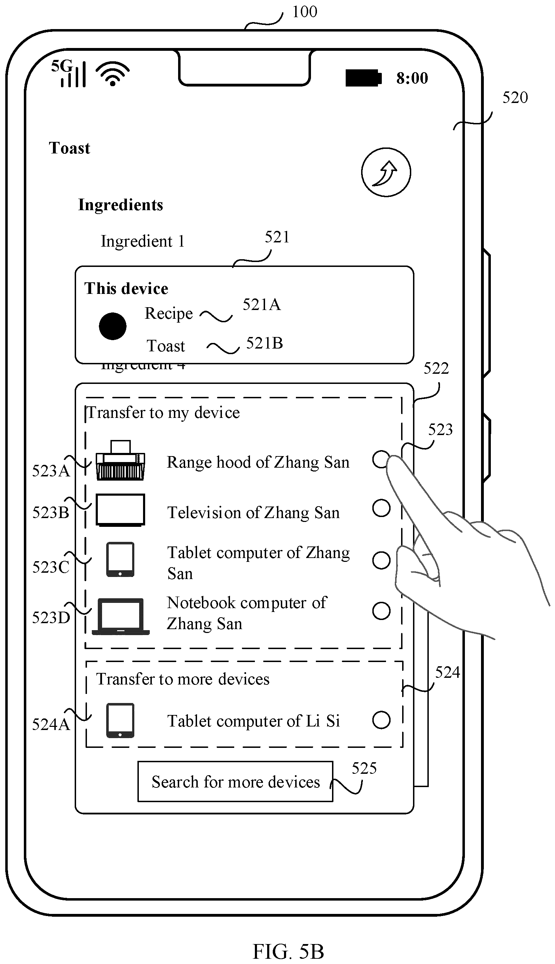

In response to an operation performed on the transfer control 511, for example, a touch operation, the device 100 may search for a surrounding device. The device 100 may display, based on devices found through searching, a user interface 520 shown in FIG. 5B. The devices found by the device 100 through searching may include a device that is currently in a communication connection with the device 100, a device that is in a same local area network as the device 100, and the like.

As shown in FIG. 5B, the user interface 520 may include a transfer information card 521 and a device option card 522.

The transfer information card 521 may include an application name 521A and a title 521B. The application name 521A may indicate a name of a to-be-transferred APP in the device 100. For example, if the application name 521A is "Recipe", it may indicate that the to-be-transferred APP is the recipe APP. The title 521B may indicate to-be-transferred content. For example, if the title 521B is "Toast", it may indicate that the to-be-transferred content is content of the "Toast" recipe in the recipe APP. Content included in the transfer information card 521 is not limited in embodiments of this application.

The device option card 522 may include device options corresponding to the devices found by the device 100 through searching. These device options can make it easy for the user to select a device, so that an APP can be transferred to the device selected by the user.

In a possible implementation, the device 100 may distinguish, in the devices found through searching, between a device that has a same login device account as the device 100 and a device that has a different login device account from the device 100. The device 100 may display, in the device option card 522, a device option corresponding to the device that has the same login device account as the device 100 and a device option corresponding to the device that has the different login device account from the device 100. A method for the device 100 to distinguish between device accounts of the devices found through searching is not limited in embodiments of this application.

For example, the device option card 522 may include a same-account device option area 523 and a different-account device option area 524. The same-account device option area 523 may be used to display the device option corresponding to the device that has the same login device account as the device 100. For example, the same-account device option area 523 may include a range hood option 523A, a television option 523B, a tablet computer option 523C, and a notebook computer option 523D. The different-account device option area 524 may be used to display the device option corresponding to the device that has the different login device account from the device 100. For example, the different-account device option area 524 may include an option 524A for a tablet computer of Li Si. The device option card 522 may further include a search control 525. The search control 525 may be used to trigger the device 100 to search for more surrounding devices, and a device option corresponding to a device found through searching is displayed in the device option card 522.

In a possible implementation, after finding surrounding devices through searching, the device 100 may further perform screening on the surrounding devices, and display, in the device option card 522, a device option corresponding to a device that can be matched with a to-be-transferred APP (for example, the recipe APP). Specifically, the device 100 may determine, based on a PCID of the device found through searching and an RPCID of the recipe APP, whether the device found through searching is matched with the recipe APP (in other words, whether a device capability of the device found through searching meets a requirement of the recipe APP). When the device found through searching is matched with the recipe APP, the device 100 may display a device option corresponding to the device in the device option card 522. In other words, all device options in the device option card 522 are device options corresponding to devices that are matched with the recipe APP.

For example, the recipe APP requires a device to have a screen display capability. The device 100 may perform screening on devices found through searching to obtain a device that has a screen display capability (for example, a range hood with a screen, a television, a tablet computer, or a notebook computer). The device 100 may display, in the device option card 522, a device option corresponding to the device obtained through screening.

As shown in FIG. 5B, in response to an operation performed on the range hood option 523A, the device 100 may transfer the recipe APP to a range hood.

In a possible implementation, the device 100 may display, in the device option card 522, device options corresponding to all devices found through searching. Then, in response to an operation of selecting a device option, the device 100 may determine whether a device corresponding to the selected device option is matched with the recipe APP. When the device is matched with the recipe APP, the device 100 can successfully transfer the recipe APP to the device. When the device is not matched with the recipe APP, the device 100 may inform the user that the recipe APP cannot be transferred to the device.

For example, in response to the operation performed on the range hood option 523A, the device 100 may determine, based on a PCID of the range hood and the RPCID of the recipe APP, whether the range hood is matched with the recipe APP. If the range hood has all device capabilities required by the recipe APP, the range hood is matched with the recipe APP. The RPCID of the recipe APP may indicate that the recipe APP requires a device to have a screen display capability. A display is configured for the range hood. The PCID of the range hood may indicate that the range hood has a screen display capability. Therefore, the device 100 may determine that the range hood is matched with the recipe APP. The device 100 may transfer the recipe APP to the range hood.

The device 100 may send, to the range hood, a request for transferring the recipe APP. The request may include device information (for example, a device name and a device type) of the device 100 and application information (for example, an application name and an application version number) of the recipe APP. The range hood may determine, based on the request, a to-be-transferred APP and a device from which the APP is transferred. The request may further include data used to restore a running state of the recipe APP. The range hood may run the recipe APP based on the data used to restore the running state of the recipe APP, and adjust the recipe APP to a running state of the recipe APP on the device 100.

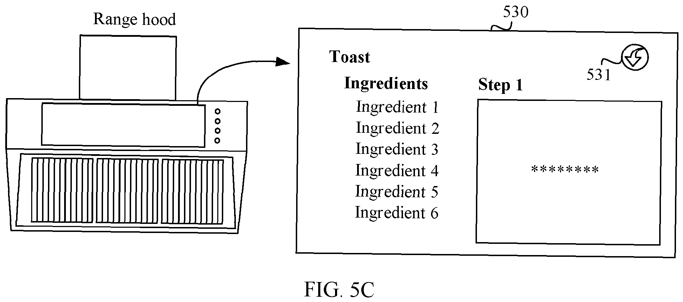

As shown in FIG. 5C, when receiving the request that is sent by the device 100 and that is for transferring the recipe APP, the range hood may display a user interface 530 in the display. The user interface 530 is a user interface of the recipe APP. The range hood may adjust the recipe APP to the running state on the device 100. For example, when transferring the recipe APP, the device 100 displays the "Toast" recipe in the recipe APP (with reference to the user interface 510 shown in FIG. 5A). When the recipe APP is transferred to the range hood, the range hood may display the "Toast" recipe in the user interface 530. In this way, running states of the recipe APP before and after the transfer can be seamless. The user may continue to view the "Toast" recipe on the range hood, without a need to search for the recipe that is searched for and viewed on the device 100 again.

In some embodiments, when the recipe APP is transferred to the range hood, the device 100 may close the recipe APP.

It may be understood that a display of the device 100 and the display of the range hood may have different sizes. After the recipe APP is transferred to the range hood, the range hood may adjust a layout of content displayed in the user interface of the recipe APP, so that the displayed content adapts to the display of the range hood. A method for adjusting the layout of the content displayed in the user interface of the recipe APP is not limited in embodiments of this application.

In some embodiments, the user interface 530 may further include a migration back control 531. The migration back control 531 may be used to transfer the recipe APP back to the device 100. In response to an operation performed on the migration back control 531, the range hood may send, to the device 100, a request for migrating back the recipe APP. The request may include data used to restore a running state of the recipe APP. The device 100 may run the recipe APP based on the data used to restore the running state of the recipe APP, and adjust the recipe APP to a running state of the recipe APP on the range hood. For example, the user searches for a "Steamed egg" recipe in the recipe APP run on the range hood. The range hood may display specific content of the "Steamed egg" recipe in the display. In response to the operation performed on the migration back control 531, the range hood may transfer the recipe APP back to the device 100. The device 100 may display the foregoing "Steamed egg" recipe.

It can be learned from the scenario shown in FIG. 5A to FIG. 5C that, when the device 100 migrates an APP to another device, the migration may not be limited by a device type. The APP may be migrated to any type of device whose device capability meets a requirement of the APP.

**The following describes another cross-device application transfer scenario provided in an embodiment of this application.**

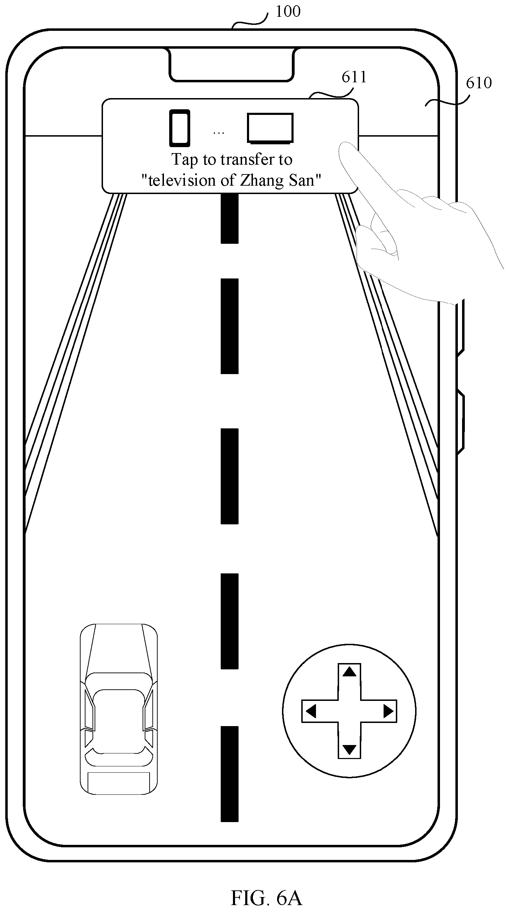

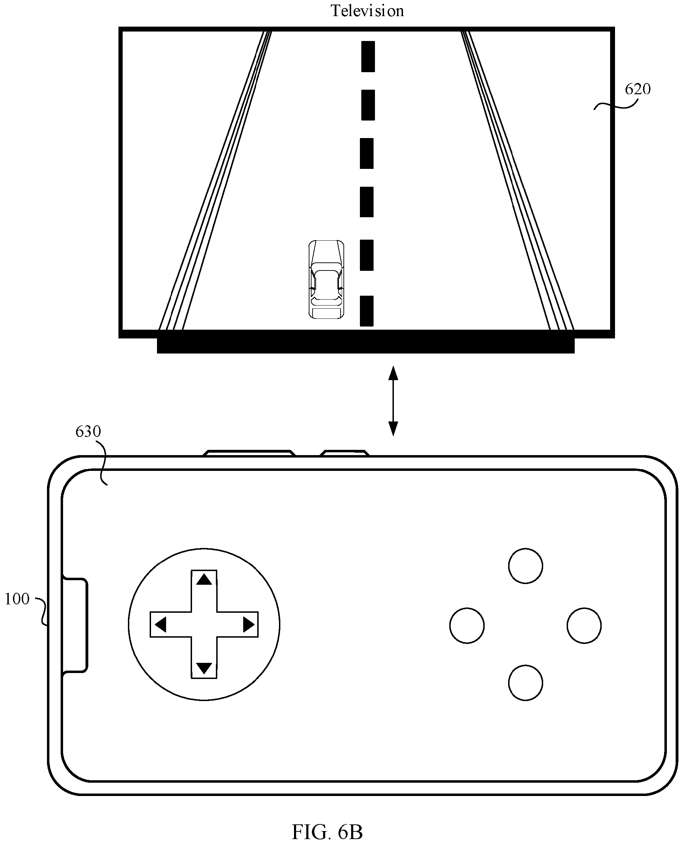

FIG. 6A and FIG. 6B are diagrams of an example of a cross-device application transfer scenario.

As shown in FIG. 6A, a device 100 may run a game APP, and display a user interface 610. The user interface 610 may be a user interface of the game APP.

In some embodiments, the device 100 may search for a surrounding device that can run the game APP in collaboration with the device 100. Specifically, the device 100 may search for a surrounding device. The device 100 may determine, based on a PCID of a device found through searching and an RPCID of the game APP, whether the device found through searching is matched with the game APP (to be specific, whether a device capability of the device found through searching meets a requirement of the game APP). When the device found through searching is matched with the game APP, the device 100 may prompt a user to use the device found through searching to run the game APP in collaboration with the device 100, to obtain better game experience.

For example, the RPCID of the game APP indicates that the game APP requires a device to have a screen display capability. The device 100 may find a television through searching, and may determine, based on a PCID of the television, that the television has a screen display capability. The device 100 may display, in the user interface 610, a transfer recommendation control 611 shown in FIG. 6A. The transfer recommendation control 611 may be used to prompt the user to transfer the game APP to the television.

In response to an operation performed on the transfer recommendation control 611, the device 100 may send, to the television, a request for transferring the game APP. The request may include device information (for example, a device name and a device type) of the device 100 and application information (for example, an application name and an application version number) of the game APP. The request may further include data used to restore a running state of the game APP. The television may run the game APP based on the data used to restore the running state of the game APP, and adjust the game APP to a running state of the game APP on the device 100. In this way, running states of the game APP before and after the transfer can be seamless. The user can continue a game on the television by starting from a game progress reached on the device 100 when the game APP is transferred. The game progress of the user is not interrupted by the transfer of the game APP.

As shown in FIG. 6B, after the game APP is transferred to the television, both the device 100 and the television may run the game APP, to work in collaboration to provide better game experience for the user. The television may display a user interface 620. The user interface 620 may include a game picture in the game APP. In this way, the user can watch the game image on a large screen to obtain a better game view. The device 100 may display a user interface 630. The user interface 630 may include a control used to perform a game operation (for example, a steering wheel operation control or a skill operation control). In this way, the user can use the device 100 as a gamepad to better operate the game.

In a possible implementation, the game APP may include a component used to display a game interface and a component used to perform a game operation. When running the game APP, the device 100 may run a program corresponding to the component used to display the game interface and a program corresponding to the component used to perform the game operation (with reference to the user interface 610 shown in FIG. 6A). In this way, the user watches a game picture on the device 100 and performs a game operation. In response to an operation of transferring the game APP to the television (for example, the operation performed on the transfer recommendation control 611 shown in FIG. 6A), the device 100 may transfer, to the television, the component used to display the game interface. When the component used to display the game interface is transferred to the television, the device 100 may stop running the program corresponding to the component used to display the game interface. In the scenario in which the device 100 and the television run the game APP in collaboration shown in FIG. 6B, the device 100 may run the program corresponding to the component used to perform the game operation, and the television may run the program corresponding to the component used to display the game interface. A specific method for the device 100 and the television run the game APP in collaboration is not limited in embodiments of this application.

In some embodiments, in addition to transferring the game APP to the television, the device 100 may provide device options corresponding to more devices having a screen display capability. The user may select a device to run the game APP in collaboration with the device 100. For a method for the user to select a device for transfer of the game APP, refer to the foregoing descriptions of the scenario shown in FIG. 5B.

It can be learned from the scenario shown in FIG. 6A and FIG. 6B that, when the device 100 transfers an APP to another device to run the APP in collaboration with the another device, the transfer may not be limited by a device type. The device 100 may run the APP in collaboration with any type of device whose device capability meets a requirement of the APP, to provide better use experience for the user.

**The following describes a method for defining and encoding a PCID and an RPCID according to an embodiment of this application.**

### 1. PCID

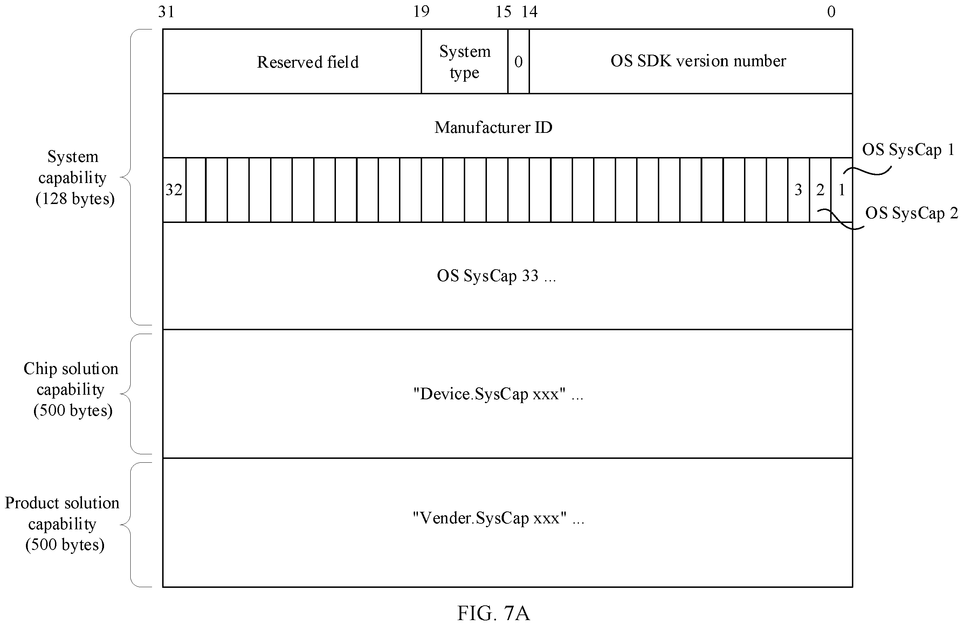

In a possible implementation, a PCID of a device 100 may include an SDK version number of an operating system (operating system, OS) of the device 100, an operating system type of the device 100, a manufacturer identification (identification, ID) of the device 100, a system capability of the operating system of the device 100, a chip solution capability of the device 100, and a product solution capability of the device 100. The PCID of the device 100 may be encoded according to an encoding method shown in FIG. 7A.

As shown in FIG. 7A, a data amount of an encoded PCID may not exceed 1.128 Kbytes.

First four bytes of the PCID may indicate the OS SDK version number and the operating system type (for example, iOS^{®}, Android^{®}, Windows^{®}, or HarmonyOS^{®}) of the device 100. For example, first 15 bits (bits) of the PCID may indicate the OS SDK version number of the device 100. A 16^{th} bit of the PCID may be preset binary code "0". The 16^{th} bit to a 20^{th} bit of the PCID may indicate the operating system type of the device 100. A 21^{st} bit to a 32^{nd} bit of the PCID may be a reserved field.

A 5^{th} byte to an 8^{th} byte of the PCID may indicate the manufacturer ID of the device 100.

A 9^{th} byte to a 128^{th} byte of the PCID may indicate the system capability of the operating system of the device 100. For example, each bit in the 9^{th} byte to the 128^{th} byte of the PCID may represent one system capability (an OS system capability). If binary code on a bit is "0", it indicates that the device 100 does not have a system capability represented by the bit. If binary code on a bit is "1", it indicates that the device 100 has a system capability represented by the bit. A 1^{st} bit in the 9^{th} byte of the PCID may represent a system capability 1 (OS SysCap 1). A 2^{nd} bit in the 9^{th} byte of the PCID may represent a system capability 2 (OS SysCap 2). If the 1^{st} bit in the 9^{th} byte of the PCID is "0", it indicates that the device 100 does not have the system capability 1. If the 1^{st} bit in the 9^{th} byte of the PCID is "1", it indicates that the device 100 has the system capability 1. Specific content of the system capability 1 and the system capability 2 is not limited in embodiments of this application.

A 129^{th} byte to a 628^{th} byte of the PCID may indicate the chip solution capability of the device 100. The chip solution capability may be defined in the PCID in a format of a character string "Device. SysCap xxx". "xxx" in the character string "Device. SysCap xxx" may indicate a specific chip solution capability. For example, if the chip solution capability of the device 100 includes an image identification capability, the PCID may include a character string "Device. SysCapImageIdentification". The character string "Device. SysCapImageIdentification" may indicate the image identification capability. A definition format of the chip solution capability is not limited in embodiments of this application.

A 629^{th} byte to a 1128^{th} byte of the PCID may indicate the product solution capability of the device 100. The product solution capability may be defined in the PCID in a format of a character string "Vender.SysCap xxx". "xxx" in the character string "Vender.SysCap xxx" may indicate a specific product solution capability. For example, if the product solution capability of the device 100 includes a capability of intelligently turning on and turning off a light, the PCID may include a character string "Vender.SysCapLightOn/Off". The character string "Vender.SysCapLightOn/Off" may indicate the capability of intelligently turning on and turning off the light. A definition format of the product solution capability is not limited in embodiments of this application.

The PCID may be written into the device 100 after the encoding operation is performed on the device 100 before delivery. The PCID may be written into the device 100 by using a device for developing an operating system. An implementation method for writing the PCID into the device 100 is not limited in embodiments of this application. Optionally, the PCID in the device 100 may be modified. For example, when the device 100 upgrades the operating system, a modified PCID may be written into the device 100.

A quantity of bytes included in the PCID is not limited in embodiments of this application. After being encoded, the PCID may include bytes more or less than 1.128 Kbytes, for example, 128 bytes, 300 bytes, 628 bytes, or 1.3 Kbytes.

The PCID encoding method shown in FIG. 7A is merely an example for description provided in this application. A method for encoding data content included in the PCID is not limited in embodiments of this application. For example, first eight bytes of the PCID indicate the OS SDK version number, and a 9^{th} byte to a 16^{th} byte of the PCID indicate the manufacturer ID.

Optionally, the PCID may not be encoded before being written into the device 100.

Encoding of each of the OS SDK version number, the operating system type, the manufacturer identification ID, the chip solution capability, and the product solution capability is optional. In some embodiments, the PCID may include only the system capability of the operating system. In some other embodiments, in addition to the system capability of the operating system, the PCID may include one or more of the following: the OS SDK version number, the operating system type, the manufacturer identification ID, the chip solution capability, and the product solution capability. Optionally, the PCID may include more device information.

As shown in FIG. 7A, in the encoding manner of the PCID, the data content included in the PCID may be compressed, to reduce a data amount of the PCID. This can facilitate transmission and storage of the PCID.

### 2. RPCID

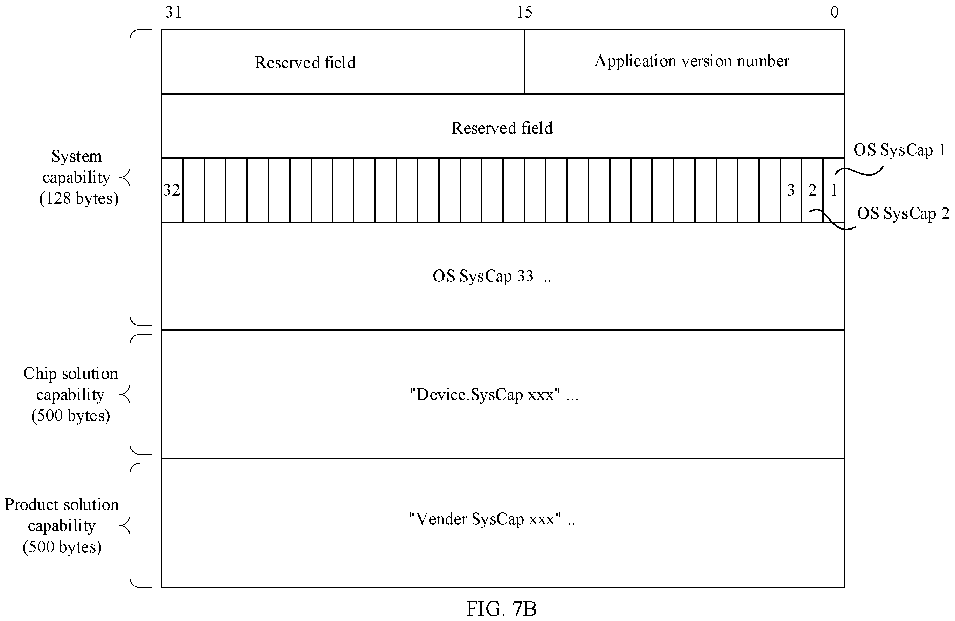

In a possible implementation, an RPCID of an APP may include a version number of the APP, and a system capability, a chip solution capability, and a product solution capability that the APP requires a device to have. The RPCID may be encoded according to an encoding method shown in FIG. 7B.

As shown in FIG. 7B, a data amount of an encoded RPCID may not exceed 1.128 Kbytes.

First two bytes of the RPCID may indicate the version number of the APP.

A 3^{rd} byte to an 8^{th} byte of the RPCID may be a reserved field.

A 9^{th} byte to a 128^{th} byte of the RPCID may indicate the system capability that the APP requires the device to have. For the 9^{th} byte to the 128^{th} byte of the RPCID, refer to the descriptions of the 9^{th} byte to the 128^{th} byte of the PCID.

A 129^{th} byte to a 628^{th} byte of the RPCID may indicate the chip solution capability that the APP requires the device to have. For the 129^{th} byte to the 628^{th} byte of the RPCID, refer to the descriptions of the 129^{th} byte to the 628^{th} byte of the PCID.

A 629^{th} byte to a 1128^{th} byte of the RPCID may indicate the product solution capability that the APP requires the device to have. For the 629^{th} byte to the 1128^{th} byte of the RPCID, refer to the descriptions of the 629^{th} byte to the 1128^{th} byte of the PCID.

The PRCID may be obtained by performing the encoding operation on data content included in the RPCID when an application developer develops the APP. The application developer may write the RPCID into a configuration file in a program installation package of the APP. When the APP is released, the RPCID of the APP may be uploaded to a server 200 together with the program installation package of the APP. An implementation method for writing the RPCID into the configuration file of the APP is not limited in embodiments of this application. Optionally, the RPCID of the APP may be modified. For example, when performing an operation such as modification or upgrade on the APP, the application developer may modify the RPCID in the configuration file of the APP. A modified RPCID may be re-uploaded to the server 200 and replace the original RPCID.

A quantity of bytes included in the RPCID is not limited in embodiments of this application. After being encoded, the RPCID may include bytes more or less than 1.128 Kbytes, for example, 128 bytes, 300 bytes, 628 bytes, or 1.3 Kbytes.

The RPCID encoding method shown in FIG. 7B is merely an example for description provided in this application. A method for encoding data content included in the RPCID is not limited in embodiments of this application. For example, first four bytes of the RPCID may indicate the version number of the APP, and a 5^{th} byte to a 16^{th} byte of the RPCID may be a reserved field.

Optionally, the RPCID may not be encoded before being written into the configuration file of the APP.

The version number of the APP, and the chip solution capability and the product solution capability that the APP requires the device to have are all optional. In some embodiments, the RPCID may include only the system capability that the APP requires the device to have. In some other embodiments, in addition to the system capability that the APP requires the device to have, the RPCID may include one or more of the following: the version number of the APP, and the chip solution capability and the product solution capability that the APP requires the device to have. Optionally, the RPCID may include more APP information.

As shown in FIG. 7B, in the encoding manner of the RPCID, the data content included in the RPCID may be compressed, to reduce a data amount of the RPCID. This can facilitate transmission and storage of the RPCID.

It may be understood that the PCID and the RPCID may alternatively have other names. This is not limited in embodiments of this application.

**The following describes a cross-device application transfer method provided in an embodiment of this application.**

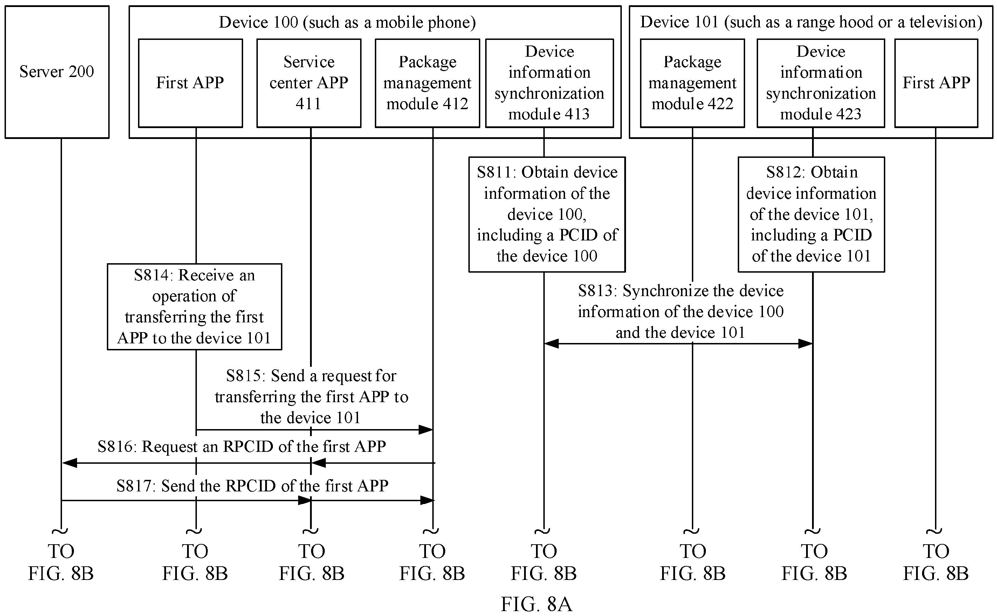

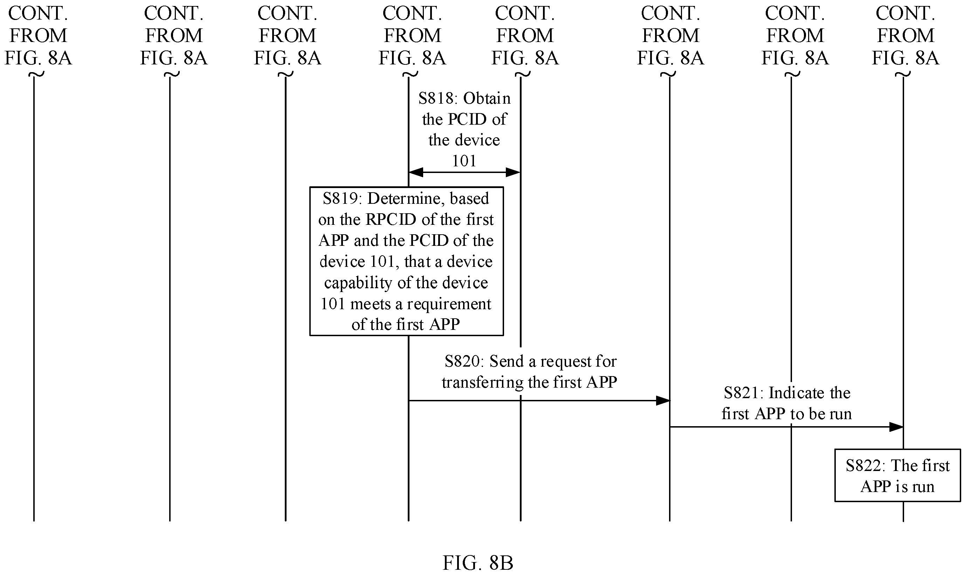

FIG. 8A and FIG. 8B are a flowchart of an example of a cross-device application transfer method. The method may include steps S811 to S822.

Herein, an example in which a device 100 transfers an APP to a device 101 is used for description. It can be learned from the communication system 40 shown in FIG. 4 that, the device 100 may include a Service center APP 411, a package management module 412, and a device information synchronization module 413. The device 101 may include a package management module 422 and a device information synchronization module 423. In addition, a first APP may be installed on both the device 100 and the device 101. The device 100 may be, for example, a mobile phone. The device 101 may be, for example, a device such as a range hood or a television. Device types of the device 100 and the device 101 are not limited in embodiments of this application. The first APP may be an APP on which application transfer can be performed. For example, the first APP may be a recipe APP, a game APP, or the like. The first APP is not limited in embodiments of this application.
1. (Steps S811 to S813) The device 100 and the device 101 synchronize device information.

S811: The device 100 may obtain device information of the device 100.

In some embodiments, the device information of the device 100 may include a PCID of the device 100.

In some embodiments, the device 100 may store the device information of the device 100, and the device 100 may obtain the device information of the device 100 from a local memory.

For example, the device 100 may further include a system capability query module 414 and a system attribute storage module 415. The system attribute storage module 415 may store the PCID of the device 100. The system capability query module 414 may obtain the PCID of the device 100 from the system attribute storage module 415. The system capability query module 414 may provide a query interface. The device information synchronization module 413 may query and obtain the PCID of the device 100 through the query interface. In addition to the PCID of the device 100, the device information synchronization module 413 may obtain other device information of the device 100. For example, the device information of the device 100 may further include a name of the device 100, an identification of a login device account on the device 100, a device type of the device 100, and the like. The device information of the device 100 is not limited in embodiments of this application.

Optionally, the device 100 may obtain the device information of the device 100 from a server 200. A method for the device 100 to obtain the device information of the device 100 is not limited in embodiments of this application.

S812: The device 101 may obtain device information of the device 101.

In some embodiments, the device information of the device 101 may include a PCID of the device 101.

In some embodiments, the device 101 may store the device information of the device 101, and the device 101 may obtain the device information of the device 101 from a local memory.

For a method for the device 101 to obtain the device information of the device 101, refer to the foregoing descriptions of the method for the device 100 to obtain the device information of the device 100 in step S811.

S813: The device 100 and the device 101 may synchronize the device information of the device 100 and the device 101.

The device 100 may send the device information of the device 100 to the device information synchronization module 423 of the device 101 by using the device information synchronization module 413. The device 101 may send the device information of the device 101 to the information synchronization module 413 of the device 100 by using the device information synchronization module 423. The device information of the device 100 and the device 101 may be transmitted through a wired communication connection or a wireless communication connection between the device 100 and the device 101.

In a possible implementation, the device 100 and the device 101 may synchronize their respective device information after discovering each other. For example, both the device 100 and the device 101 join a same local area network. The device 100 and the device 101 may discover each other. Then, the device 100 and the device 101 may synchronize their respective device information.

In another possible implementation, the device 100 and the device 101 may synchronize their respective device information after an operation of transferring an APP (for example, an operation of transferring an APP run on the device 100 to the device 101, or an operation of transferring an APP run on the device 101 to the device 100) is received. In other words, steps S811 to S813 may alternatively be performed after step S818. A time at which the device 100 and the device 101 synchronize their respective device information is not limited in embodiments of this application.

The device 100 and the device 101 may implement device information synchronization by steps S811 to S813. After the device information synchronization, the device 100 may obtain the PCID of the device 101, and the device 101 may obtain the PCID of the device 100.

2. (Steps S814 to S822) The device 100 transfers the first APP to the device 101.

S814: The device 100 receives an operation of transferring the first APP to the device 101.

For the operation of transferring the first APP to the device 101, refer to the operation performed on the range hood option 523A shown in FIG. 5B, or refer to the operation performed on the transfer recommendation control 611 shown in FIG. 6A.

S815: The first APP on the device 100 may send, to the package management module 412, a request for transferring the first APP to the device 101.

S816: The device 100 may request an RPCID of the first APP from the server 200.

The package management module 412 of the device 100 may request the RPCID of the first APP from the server 200 through the Service center APP 411.

S817: The server 200 may send the RPCID of the first APP to the device 100.

The server 200 may send the RPCID of the first APP to the package management module 412 through the Service center APP 411.

In a possible implementation, step S816 and step S817 are optional.

When the first APP is installed on the device 100, the package management module 412 may obtain the RPCID of the first APP from a program installation package of the first APP. In this way, there may be no need for the device 100 to request the RPCID of the first APP from the server 200. (In other words, step S816 and step S817 are optional.) For example, in the application transfer scenarios shown in FIG. 5A to FIG. 5C and FIG. 6A and FIG. 6B, there may be no need for the device 100 to request an RPCID of a to-be-transferred APP (for example, the recipe APP or the game APP) from the server 200.

When the first APP is not installed on the device 100, the package management module 412 may perform step S816, to obtain the RPCID of the first APP from the server 200. For example, the device 100 has no payment account. The device 101 has a payment account, and may make a shopping payment. A component that is of a shopping application and that is used to provide a commodity browsing function and a component that is of the shopping application and that is used to provide a shopping cart function are installed on the device 100. However, a component that is of the shopping application and that is used to provide a payment function is not installed on the device 100. A user may browse commodities on the device 100 and add a required commodity to a shopping cart. The user may trigger, by using a control used for payment in the device 100, the device 100 to transfer, to another device, for example, the device 101, the component used to provide the payment function. Based on the operation of transferring the component used to provide the payment function, the device 100 may request, from the server 200, an RPCID of the component used to provide the payment function.

S818: The package management module 412 may obtain the PCID of the device 101 from the device information synchronization module 413.

A sequence of performing steps S816, S817, and S818 is not limited in embodiments of this application. In a possible implementation, the package management module 412 may simultaneously perform step S816 and step S818. Optionally, the package management module 412 may alternatively first perform step S818, and then perform step S816.

S819: The device 100 may determine, based on the RPCID of the first APP and the PCID of the device 101, that a device capability of the device 101 meets a requirement of the first APP.

S820: The device 100 may send, to the device 101, a request for transferring the first APP.

The device 100 may determine, based on the RPCID of the first APP and the PCID of the device 101 by using the package management module 412, whether the device 101 has all device capabilities required by the first APP. If the device 101 has all the device capabilities required by the first APP, the device capability of the device 101 meets the requirement of the first APP. Then, the package management module 412 may send, to the package management module 422 of the device 101, a request for transferring the first APP.

If the device 100 does not have all or a part of the device capabilities required by the first APP, the device capability of the device 100 does not meet the requirement of the first APP. Then, the device 100 may display a transfer failure prompt. The transfer failure prompt may be used to inform the user that the first APP cannot be transferred to the device 101.

S821: The package management module 422 of the device 101 may indicate the first APP to be run.

S822: The first APP is run on the device 101.

In a possible implementation, the request for transferring the first APP in step S820 may include data used to restore a running state of the first APP. When receiving the operation of transferring the first APP to the device 101, the device 100 may run the first APP. The data used to restore the running state of the first APP may indicate a running state of the first APP on the device 100 during the transfer. Based on the data used to restore the running state of the first APP, the device 101 may run the first APP, and restore a running state of the first APP to the running state of the first APP on the device 100 during the transfer. In this way, running states of the first APP before and after the transfer can be seamless. An operation performed by the user on the first APP on the device 100 may not be interrupted by the foregoing application transfer process.

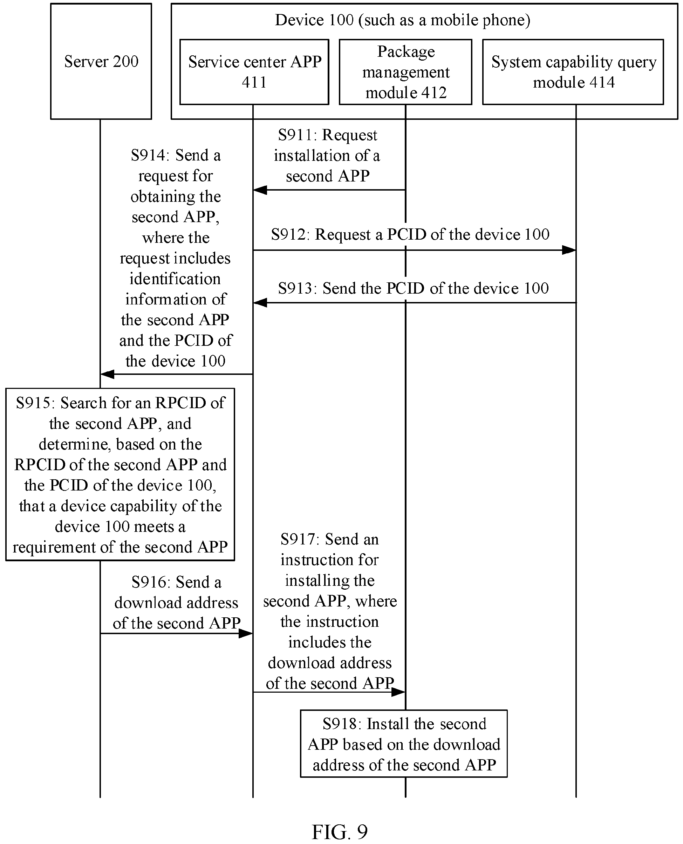

In a possible implementation, when receiving, from the device 100, the request for transferring the first APP, the package management module 422 of the device 101 may determine whether the first APP is installed on the device 101. When the first APP is installed on the device 101, the device 100 may directly run the first APP. When the first APP is not installed on the device 101, the device 100 may request a program installation package of the first APP from the server 200, to install the first APP. For a method for the device 100 to install the first APP, refer to a subsequent application installation method shown in FIG. 9.

In a possible implementation, steps S816 to S819 may be performed before step S814.

For example, after the first APP on the device 100 receives an operation of transferring the first APP that does not specify a device for transfer (for example, the operation performed on the transfer control 511 shown in FIG. 5A), the first APP may send, to the package management module 412, a request for transferring the first APP. Then, the package management module 412 may obtain the RPCID of the first APP and a PCID of a device found by the device 100 through searching. The device 100 may find the device 101 through searching. In this case, the package management module 412 may obtain the PCID of the device 101. Based on the RPCID of the first APP and the PCID of the device found by the device 100 through searching, the package management module 412 may perform screening to obtain a device whose device capability can meet a requirement of the first APP. The device 100 may provide, for the user, a device option corresponding to the device obtained by the package management module 412 through screening (for example, the device option included in the device option card 522 shown in FIG. 5B). In other words, in response to the operation of transferring the first APP that does not specify a device for transfer, the device 100 may first perform steps S816 to S819. The user may select a device for transfer based on the device option provided by the device 100. When receiving an operation of selecting a device option corresponding to the device 101, the device 100 may transfer the first APP to the device 101. The operation of selecting the device option corresponding to the device 101 is the operation of transferring the first APP to the device 101 in step S814.

It should be noted that a sequence of steps in the flowchart shown in FIG. 8A and FIG. 8B does not constitute a limitation on a sequence of performing these steps.

The device 100 may transfer the first APP to the device 101 by steps S814 to S822.

It can be learned from the method shown in FIG. 8A and FIG. 8B that, the device 100 may implement application transfer based on a device capability. In this way, even for a new device type, as long as a device capability of a device of the new device type meets a requirement of an application, the application can be transferred to the device of the new device type. There is no need for an application developer to upgrade and adjust the application for the new device type to make the application adapt to the new device type. It can be learned that the method can break through a limitation of a device type on application transfer, so that the application can be transferred to any type of device whose device capability meets the requirement of the application. In addition, the method can reduce workload of the developer, and improve work efficiency of the developer. There is no need for the developer to re-develop and adapt the application when a new device type occurs.

**The following describes an application installation method provided in an embodiment of this application.**

FIG. 9 is a flowchart of an example of an application installation method. The method may include steps S911 to S918.

Herein, an example in which a device 100 installs an APP is used for description. It can be learned from the communication system 40 shown in FIG. 4 that, the device 100 may include a Service center APP 411, a package management module 412, and a system capability query module 414.

S911: The package management module 412 may request installation of a second APP from the Service center APP 411.

In a possible implementation, when receiving a request that is sent by another device and that is for transferring the second APP to the device 100, the package management module 412 may determine whether the second APP is installed on the device 100. When the second APP is not installed on the device 100, the package management module 412 may request the installation of the second APP from the Service center APP 411.

In another possible implementation, when receiving a request that is sent by another application on the device 100 and that is for installing the second APP, the package management module 412 may request the installation of the second APP from the Service center APP 411. For example, a component that is of a shopping application and that is used to provide a commodity browsing function is currently installed on the device 100, but a component that is of the shopping application and that is used to provide a shopping cart function is not installed. In response to an operation of adding a specified commodity to a shopping cart, the component used to provide the commodity browsing function may send, to the package management module 412, a request for installing the component used to provide the shopping cart function. Further, the package management module 412 may request, from the Service center APP 411, installation of the component used to provide the shopping cart function.

S912: The Service center APP 411 may request a PCID of the device 100 from the system capability query module 414.

S913: The system capability query module 414 may send the PCID of the device 100 to the Service center APP 411.

The device 100 may further include a system attribute storage module 415. The system attribute storage module 415 may store the PCID of the device 100. The system capability query module 414 may obtain the PCID of the device 100 from the system attribute storage module 415. The system capability query module 414 may provide a query interface. The Service center APP 411 may query and obtain the PCID of the device 100 through the query interface.

S914: The Service center APP 411 may send a request for obtaining the second APP to a server 200, where the request includes identification information of the second APP and the PCID of the device 100.

S915: The server 200 may search for an RPCID of the second APP, and determine, based on the RPCID of the second APP and the PCID of the device 100, that a device capability of the device 100 meets a requirement of the second APP.

S916: The server 200 may send a download address of the second APP to the Service center APP 411.

S917: The Service center APP 411 may send an instruction for installing the second APP to the package management module 412, where the instruction includes the download address of the second APP.

S918: The package management module 412 may install the second APP based on the download address of the second APP.

When the device capability of the device 100 does not meet the requirement of the second APP, the server 200 may send a download failure message to the device 100. Then, the device 100 may inform a user that the second APP cannot be installed on the device 100.

In a possible implementation, when the device capability of the device 100 meets the request of the second APP, the server 200 may directly send a program installation package of the second APP to the device 100. A method for the device 100 to obtain the program installation package of the second APP is not limited in embodiments of this application.

It can be learned from the method shown in FIG. 9 that, an application may be installed on a device based on a device capability. In this way, even for a new device type, as long as a device capability of a device of the new device type meets a requirement of an application, the application can be installed on the device of the new device type. There is no need for an application developer to upgrade and adjust the application for the new device type to make the application adapt to the new device type. It can be learned that the method can break through a limitation of a device type on application installation, so that the application can be installed on any type of device whose device capability meets the requirement of the application. In addition, the method can reduce workload of the developer, and improve work efficiency of the developer. There is no need for the developer to re-develop and adapt the application when a new device type occurs.

It may be understood that each user interface described in embodiments of this application is merely an example interface, and does not constitute a limitation on the solutions of this application. **In** another embodiment, the user interface may use different interface layouts, may include more or fewer controls, and may add or reduce other function options, and all fall within the protection scope of this application provided that the user interface is based on a same inventive idea provided in this application. It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended to describe the technical solutions of this application, but are not intended to limit this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the scope of the technical solutions of embodiments of this application.

## Claims

1. A cross-device application transfer method, comprising:
detecting, by a first device, a first operation, wherein the first operation is used to transfer a first application;
obtaining, by the first device, first application information of the first application and first device information of a second device in response to the first operation, wherein the first application information comprises information about a device capability required by the first application, and the first device information comprises information about a device capability of the second device;
determining, by the first device based on the first application information and the first device information, that the device capability of the second device meets a requirement of the first application; and
transferring, by the first device, the first application to the second device.

2. The method according to claim 1, wherein the obtaining, by the first device, first application information of the first application and first device information of a second device in response to the first operation specifically comprises:
finding, by the first device through searching, K1 devices in response to the first operation, wherein the K1 devices comprise the second device, and K1 is a positive integer;
providing, by the first device, K1 device options corresponding to the K1 devices, wherein the K1 device options comprise a device option corresponding to the second device;
detecting, by the first device, an operation of selecting the device option corresponding to the second device; and
obtaining, by the first device, the first application information and the first device information.

3. The method according to claim 1, wherein the obtaining, by the first device, first application information of the first application and first device information of a second device in response to the first operation specifically comprises:
finding, by the first device through searching, K1 devices in response to the first operation, wherein the K1 devices comprise the second device, and K1 is a positive integer; and
obtaining, by the first device, the first application information and device information of the K1 devices, wherein the device information of the K1 devices comprises the first device information; and
the determining, by the first device based on the first application information and the first device information, that the device capability of the second device meets a requirement of the first application specifically comprises:
determining, by the first device based on the first application information and the device information of the K1 devices, that device capabilities of K2 devices in the K1 devices meet the requirement of the first application, wherein the K2 devices comprise the second device, and K2 is a positive integer less than or equal to K1;
providing, by the first device, K2 device options corresponding to the K2 devices, wherein the K2 device options comprise a device option corresponding to the second device; and
detecting, by the first device, an operation of selecting the device option corresponding to the second device.

4. The method according to any one of claims 1 to 3, wherein the method further comprises:
finding, by the first device through searching, the third device;
obtaining, by the first device, second application information of a second application and second device information of the third device, wherein the second application information comprises information about a device capability required by the second application, and the second device information comprises information about a device capability of the third device;
determining, by the first device based on the second application information and the second device information, that the device capability of the third device meets a requirement of the second application;
providing, by the first device, a first transfer control, wherein the first transfer control is used to transfer the second application to the third device; and
detecting, by the first device, an operation performed on the first transfer control, and transferring the second application to the third device.

5. The method according to any one of claims 1 to 4, wherein the obtaining, by the first device, first application information of the first application specifically comprises:
sending, by the first device, a request for obtaining the first application information to a server, and receiving the first application information from the server; or
searching, by the first device, a memory of the first device for the first application information.

6. The method according to any one of claims 1 to 5, wherein the method further comprises:
detecting, by the first device, a second operation, wherein the second operation is used to transfer a third application to the second device;
obtaining, by the first device, third application information of the third application and the first device information in response to the third operation, wherein the third application information comprises information about a device capability required by the third application;
determining, by the first device based on the third application information and the first device information, that the device capability of the second device does not meet a requirement of the third application; and
providing, by the first device, a transfer failure prompt, wherein the transfer failure prompt indicates that the third application is unavailable to be transferred to the second device.

7. The method according to any one of claims 1 to 6, wherein the method further comprises:
sending, by the first device, third device information of the first device to the second device, wherein the third device information comprises information about a device capability of the first device;
receiving, by the first device, a request for transferring a fourth application to the first device;
and
running, by the first device, the fourth application, wherein
the device capability of the first device meets a requirement of the fourth application.

8. The method according to claim 7, wherein before the running, by the first device, the fourth application, the method further comprises:
determining, by the first device, whether the fourth application is installed on the first device;
and
when the fourth application is not installed on the first device, requesting, by the first device, installation of the fourth application from the server.

9. The method according to any one of claims 1 to 8, wherein the method further comprises:
sending, by the first device, a first request to the server, wherein the first request is used to request the installation of the fourth application, the first request comprises the third device information of the first device, and the third device information comprises the information about the device capability of the first device; and
receiving, by the first device, installation information of the fourth application, and installing the fourth application, wherein
the device capability of the first device meets the requirement of the fourth application.

10. The method according to any one of claims 1 to 9, wherein the method further comprises:
sending, by the first device, a second request to the server, wherein the second request is used to request installation of a fifth application, the second request comprises the third device information of the first device, and the third device information comprises the information about the device capability of the first device; and
receiving, by the first device, an installation failure prompt, wherein the installation failure prompt indicates that the fifth application is unavailable to be installed on the first device, wherein
the device capability of the first device does not meet a requirement of the fifth application.

11. The method according to any one of claims 1 to 10, wherein the information about the device capability comprises one or more of the following: information about a system capability, information about a chip solution capability, and information about a product solution capability.

12. A device, wherein the device comprises a memory and a processor, the memory is configured to store a computer program, and the processor is configured to invoke the computer program, to enable the device to perform the method according to any one of claims 1 to 11.

13. A computer-readable storage medium, comprising instructions, wherein when the instructions are run on a device, the device is enabled to perform the method according to any one of claims 1 to 11.

14. A computer program product, wherein the computer program product comprises computer instructions, and when the computer instructions are run on a device, the device is enabled to perform the method according to any one of claims 1 to 11.
